# EUROPEAN PATENT APPLICATION

(11) **EP 2 848 172 A1**
(43) Date of publication of application: **18.03.2015**
(21) Application number: 14761939.9
(22) Date of filing: 11.07.2014
(51) Int. Cl.: A47K 7/02, C08J 9/00, B29C 44/02

(54) **METHOD FOR MANUFACTURING CLEANING TOOL**

(30) Priority: 12.07.2013 KR 20130082179
(71) Applicant: Kim, Jung Hoa, Jeju-si Jeju-do 690-122 (KR)
(72) Inventor: KIM, Jung Hoa, Jeju-do 690-122 (KR)
(74) Representative: Von Rohr Patentanwälte Partnerschaft mbB
(86) International application number: PCT/KR2014/006252
(87) International publication number: WO 2015/005720

(57) **Abstract**

This invention relates to a method of manufacturing a cleaning implement, including placing a natural loofah in a portion of a mold having an inner space, producing a mixed solution, which is then added with a konjac powder and stirred, thus preparing a feed mixture, placing the feed mixture in a portion of the mold other than the portion containing the natural loofah so as to be shaped such that the natural loofah and the feed mixture adhere to each other, and performing aging, steam heating and cooling.

## Description

### [Technical Field]

The present invention relates to a method of manufacturing a cleaning implement which may be conveniently and variously used for cleaning human skin.

### [Background Art]

Cleaning implements include loofahs for washing dishes, towels for wiping water, sweat or other impurities from human skin, and cleansing towels or cleansing sponges for cleaning human skin.

For cleaning implements for cleaning human skin, chemical sponges made of chemical fiber have been typically utilized, but there are side effects, such as skin irritation, associated with use of such chemical sponges, particularly in the case of users with sensitive skin.

Accordingly, the use of natural sponges made of natural materials, which may minimize skin irritation, is increasing these days. However, conventional sponges made of natural materials are composed exclusively of a single kind of natural material, making it difficult to use them for various skin types or skin areas of users, thus making it impossible to obtain satisfactory cleaning effects. Conventional cleaning implements are cumbersome because they should be separately used depending on the skin type or the cleaning application. Furthermore, various kinds of cleaning implements adapted for individual skin types or cleaning applications should be separately purchased, which is undesirable.

### [Disclosure]

### [Technical Problem]

Accordingly, the present invention has been made keeping in mind the problems encountered in the prior art, and an object of the present invention is to provide a method of manufacturing a cleaning implement, wherein the cleaning implement may be used alone so as to be adapted for various skin types or skin areas of users or cleaning applications, and may also exhibit high cleaning power and minimize skin irritation of users.

### [Technical Solution]

An aspect of the present invention provides a method of manufacturing a cleaning implement, comprising: placing a natural loofah in a portion of a mold having an inner space; mixing water, a neutralizing agent, a mordanting agent, a foaming agent, an emulsifier and glycerin to obtain a mixed solution, which is then added with a konjac powder and stirred, thus preparing a feed mixture; placing the feed mixture in a portion of the mold other than the portion containing the natural loofah so as to be shaped such that the natural loofah and the feed mixture adhere to each other; aging the feed mixture in the mold at 20 ∼ 30°C for 5 ∼ 20 hr; steam heating the feed mixture at 90 ∼ 110°C for 1 ∼ 5 hr using a steam heater, thus forming a natural loofah-adhered sponge; cooling the natural loofah-adhered sponge to 20 ∼ 25°C for 1 ∼ 2 hr; quenching the natural loofah-adhered sponge to - 35 ∼ -25°C for 2 ∼ 4 hr in a freezer; primarily freezing the natural loofah-adhered sponge to -15 ∼ -10°C for 3 ∼ 4 days in a freezer; primarily thawing the natural loofah-adhered sponge at 20 ∼ 30°C, thus removing the water, the neutralizing agent, the mordanting agent, the foaming agent, the emulsifier and the glycerin from the sponge by leakage; secondarily freezing the natural loofah-adhered sponge to -15 ∼ -10°C for 3 ∼ 4 days; secondarily thawing the natural loofah-adhered sponge at 20 - 30°C, thus removing the water, the neutralizing agent, the mordanting agent, the foaming agent, the emulsifier and the glycerin remaining in the sponge by leakage; immersing the natural loofah-adhered sponge in a bath containing an antimicrobial agent so as to undergo antimicrobial treatment and dehydrating the natural loofah-adhered sponge; and hermetically packaging the natural loofah-adhered sponge under the condition that water is contained.

In preparing the feed mixture, the mixed solution is preferably obtained by mixing, based on the total weight of the mixed solution, 90 ∼ 93 wt% of the water, 0.1 ∼ 0.2 wt% of the neutralizing agent, 0.1 - 0.2 wt% of the mordanting agent, 0.1 - 0.2 wt% of the foaming agent, 0.5 - 1 wt% of the emulsifier, and 6 ∼ 9 wt% of the glycerin.

In preparing the feed mixture, the konjac powder added to the mixed solution is preferably used in an amount of 1 part by weight based on 12 parts by weight of the mixed solution.

In preparing the feed mixture, the konjac powder preferably has a particle size of 130 - 180 mesh.

In packaging, the natural loofah-adhered sponge preferably contains water in an amount of 300 - 900% by weight based on the weight of a dry natural loofah-adhered sponge.

Another aspect of the present invention provides a cleaning implement, manufactured by the aforementioned method and configured such that a konjac sponge part comprising a sponge composed mainly of konjac is integrated with a natural loofah part comprising a natural loofah.

Still another aspect of the present invention provides method of manufacturing a cleaning implement, comprising: mixing water, a neutralizing agent, a mordanting agent, a foaming agent, an emulsifier and glycerin to obtain a mixed solution, which is then added with a konjac powder and a plurality of natural loofah pieces, and stirred, thus preparing a feed mixture; placing the feed mixture in a mold so as to be shaped; aging the feed mixture in the mold at 20 ∼ 30°C for 5 ∼ 20 hr; steam heating the feed mixture at 90 ∼ 110°C for 1 - 5 hr using a steam heater, thus forming a sponge; cooling the sponge to 20 - 25°C for 1 ∼ 2 hr; quenching the sponge to -35 - -25°C for 2 - 4 hr in a freezer; primarily freezing the sponge to -15 ∼ -10°C for 3 ∼ 4 days in a freezer; primarily thawing the sponge at 20 ∼ 30°C, thus removing the water, the neutralizing agent, the mordanting agent, the foaming agent, the emulsifier and the glycerin from the sponge by leakage; secondarily freezing the sponge to -15 ∼ -10°C for 3 - 4 days; secondarily thawing the sponge at 20 ∼ 30°C, thus removing the water, the neutralizing agent, the mordanting agent, the foaming agent, the emulsifier and the glycerin remaining in the sponge by leakage; immersing the sponge in a bath containing an antimicrobial agent so as to undergo antimicrobial treatment and dehydrating the sponge; and hermetically packaging the sponge under the condition that water is contained.

In preparing the feed mixture, the mixed solution is preferably obtained by mixing, based on the total weight of the mixed solution, 90 ∼ 93 wt% of the water, 0.1 ∼ 0.2 wt% of the neutralizing agent, 0.1 ∼ 0.2 wt% of the mordanting agent, 0.1 ∼ 0.2 wt% of the foaming agent, 0.5 - 1 wt% of the emulsifier, and 6 ∼ 9 wt% of the glycerin.

In preparing the feed mixture, the konjac powder added to the mixed solution is preferably used in an amount of 1 part by weight based on 12 parts by weight of the mixed solution.

In preparing the feed mixture, the plurality of natural loofah pieces added to the mixed solution is preferably used in an amount of 1 ∼ 30 wt% based on the weight of the konjac powder added to the mixed solution.

In preparing the feed mixture, the konjac powder preferably has a particle size of 130 ∼ 180 mesh, and the natural loofah pieces preferably have a length of 1 ∼ 15 mm.

In packaging, the sponge preferably contains water in an amount of 300 ∼ 900% by weight based on the weight of a dry sponge.

Yet another aspect of the present invention provides a cleaning implement, manufactured by the aforementioned method and configured such that a konjac sponge part comprising a sponge composed mainly of konjac is integrated with a natural loofah part comprising a natural loofah.

### [Advantageous Effects]

According to embodiments of the present invention, a method of manufacturing a cleaning implement can obviate the use of a bonding agent which is liable to have a negative influence on the human body when a natural loofah part is coupled with a konjac sponge part.

Also, a cleaning implement manufactured by the method according to an embodiment of the present invention is configured such that a konjac sponge and a natural loofah, which are natural materials having different properties, adhere to each other so as to be integrated into a single cleaning implement. Thereby, the two kinds of natural materials can be selectively used depending on the skin type or skin area of a user, thus increasing cleaning power. Furthermore, the natural materials of the single cleaning implement can be selectively used so as to be adapted for cleaning applications including cleansing and bathing.

Also, a cleaning implement manufactured by the method according to another embodiment of the present invention is configured to include a konjac sponge comprising a plurality of natural loofah pieces, and thus the rough surface tissue based on the natural loofah pieces is complemented with the soft surface tissue based on the konjac component, ultimately exhibiting high skin contact and high cleaning power even on any skin type or skin area. Therefore, this cleaning implement can be widely used alone regardless of the skin type or the skin area and can also manifest satisfactory cleaning power, unlike existing products.

Furthermore, the cleaning implement composed of natural materials according to the present invention can minimize the skin irritation of a user, and is thereby effective at preventing the side effects on the skin from occurring due to the use of existing products made of chemical fiber.

### [Description of Drawings]

FIG. 1 is a flowchart illustrating a process of manufacturing a cleaning implement according to an embodiment of the present invention; and
FIG. 2 is a flowchart illustrating a process of manufacturing a cleaning implement according to another embodiment of the present invention.

### [Best Mode]

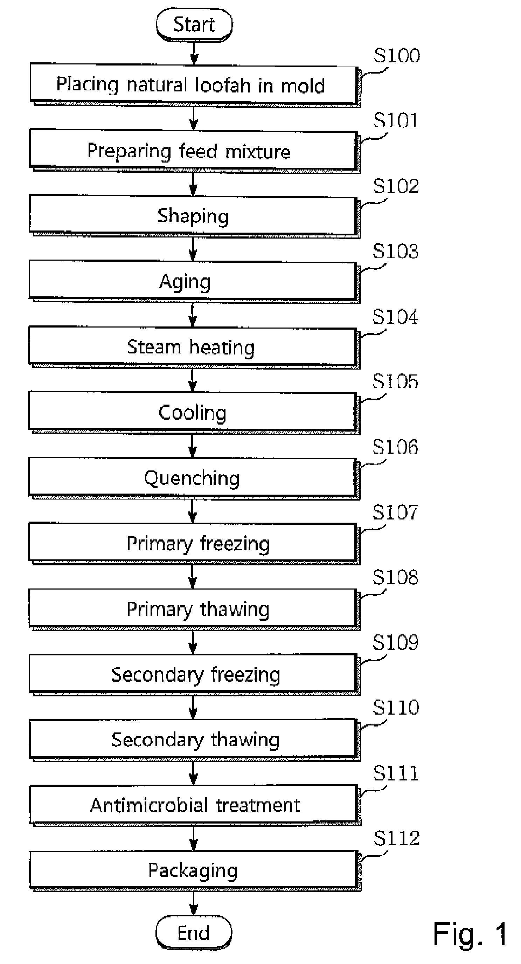

Below is a detailed description of an embodiment of the present invention with reference to FIG. 1.

As illustrated in FIG. 1, the method of manufacturing the cleaning implement according to the embodiment of the present invention includes the sequential steps of: placing a natural loofah in a portion of a mold having an inner space (S100); mixing water, a neutralizing agent, a mordanting agent, a foaming agent, an emulsifier and glycerin to obtain a mixed solution, which is then added with a konjac powder and stirred, thus preparing a feed mixture (S101); placing the feed mixture in a portion of the mold other than the portion containing the natural loofah so as to be shaped such that the natural loofah and the feed mixture adhere to each other (S102) ; aging the feed mixture in the mold at 20 ∼ 30°C for 5 ∼ 20 hr (S103); steam heating the feed mixture at 90 ∼ 110°C for 1 - 5 hr using a steam heater, thus forming a natural loofah-adhered sponge (S104); cooling the natural loofah-adhered sponge to 20 - 25°C for 1 ∼ 2 hr (S105); quenching the natural loofah-adhered sponge to -35 - -25°C for 2 ∼ 4 hr in a freezer (S106); primarily freezing the natural loofah-adhered sponge to -15 ∼ -10°C for 3 ∼ 4 days in a freezer (S107); primarily thawing the natural loofah-adhered sponge at 20 ∼ 30°C, thus removing the water, the neutralizing agent, the mordanting agent, the foaming agent, the emulsifier and the glycerin from the sponge by leakage (S108); secondarily freezing the natural loofah-adhered sponge to -15 - -10°C for 3 ∼ 4 days (S109); secondarily thawing the natural loofah-adhered sponge et 20 - 30°C, thus removing the water, the neutralizing agent, the mordanting agent, the foaming agent, the emulsifier and the glycerin remaining in the sponge by leakage (S110); immersing the natural loofah-adhered sponge in a bath containing an antimicrobial agent so as to undergo antimicrobial treatment and dehydrating it (S111); and hermetically packaging the natural loofah-adhered sponge under the condition that water is contained (S112).

### [Mode for Invention]

Hereinafter, a detailed description will be given of embodiments of the present invention with reference to the appended drawings.

FIG. 1 is a flowchart illustrating a process of manufacturing a cleaning implement according to an embodiment of the present invention.

As illustrated in FIG. 1, the method of manufacturing a cleaning implement according to the embodiment of the present invention includes the sequential steps of ; placing a natural loofah in a portion of a mold having an inner space (S100); mixing water, a neutralizing agent, a mordanting agent, a foaming agent, an emulsifier and glycerin to obtain a mixed solution, which is then added with a konjac powder and stirred, thus preparing a feed mixture (S101); placing the feed mixture in a portion of the mold other than the portion 9 containing the natural loofah so as to be shaped such that the natural loofah and the feed mixture adhere to each other (S102); aging the feed mixture in the mold at 20 ∼ 30°C for 5 ∼ 20 hr (S103); steam heating the feed mixture at 90 ∼ 110°C for 1 ∼ 5 hr using a steam heater, thus forming a natural loofah-adhered sponge (S104); cooling the natural loofah-adhered sponge to 20 ∼ 25°C for 1 - 2 hr (S105); quenching the natural loofah-adhered sponge to -35 ∼ -25°C for 2 - 4 hr in a freezer (S106); primarily freezing the natural loofah-adhered sponge to -15 ∼ -10°C for 3 ∼ 4 days in a freezer (S107); primarily thawing the natural loofah-adhered sponge at 20 ∼ 30°C, thus removing the water, the neutralizing agent, the mordanting agent, the foaming agent, the emulsifier and the glycerin from the sponge by leakage (S108); secondarily freezing the natural loofah-adhered sponge to -15 - -10°C for 3 ∼ 4 days (S109); secondarily thawing the natural loofah-adhered sponge at 20 ∼ 30°C, thus removing the water, the neutralizing agent, the mordanting agent, the foaming agent, the emulsifier and the glycerin remaining in the sponge by leakage (S110); immersing the natural loofah-adhered sponge in a bath containing an antimicrobial agent so as to undergo antimicrobial treatment and dehydrating the natural loofah-adhered sponge (S111); and hermetically packaging the natural loofah-adhered sponge under the condition that water is contained (S112).

Another embodiment of the present invention addresses a cleaning implement, manufactured by the aforementioned method and configured such that a konjac sponge part comprising a sponge composed mainly of konjac is integrated with a natural loofah part comprising a natural loofah. Briefly, a cleaning implement includes a sponge area composed mainly of konjac and a natural loofah area.

In the present invention, konjac is provided in the form of a powder composed mainly of glucomannan by subjecting the perennial plant belonging to the Araceae to a series of processes of planting in the spring, harvesting in the late fall and planting again in the next spring, for two or three years, thus obtaining a konjac material, which is then sliced and dried to remove starch. Therefore, konjac is mostly utilized in food products, including fish meat paste products such as fist cakes or crab meat, hams, frozen products, noodles, etc.

Konjac may absorb water as much as about 15 ∼ 20 times its weight. Then, it swells and becomes colloidal, thus exhibiting very high water retention performance and superior moisturizing performance for preventing surface drying.

Hence, the present invention includes a konjac sponge part comprising a sponge composed mainly of konjac, thereby preventing skin irritation upon cleaning of a user with sensitive skin, improving a massage effect due to its specific natural mesh structure, easily removing small impurities, and imparting a more pleasant cleaning feel upon skin cleaning due to the soft touch of konjac. Particularly, the konjac sponge part has dense and fine mesh tissue and becomes soft, and is thus suitable for use in the skin area, such as the face, which is sensitive and vulnerable to external stimuli.

In the present invention, the natural loofah refers to dry spongy tissue of the fruit of Luffa cylindrica Roem. Luffa cylindrica Roem. is commonly called a sponge gourd. As this name implies, natural loofah has spongy properties, based on the reticular fiber of the natural loofah. Luffa cylindrica Roem. originates from tropical Asia and is a first-year plant. Also, Luffa cylindrica Roem. is harvested in Korea, China, Japan, etc. The natural loofah according to the present invention is not limited to that obtained from the fruit of Luffa cylindrica Roem. of a specific locality.

Compared to the mesh tissue of the sponge composed mainly of konjac, the mesh tissue of the natural loofah is neither fine nor dense and has relatively rough touch, and is thus suitable for use in cleaning skin areas, such as the body, arms and legs, which are less sensitive to external stimuli.

The shape of the cleaning implement according to the present invention is not particularly limited, and may include, for example, a cylindrical shape, a rectangular parallelepiped shape, a spherical shape, etc.

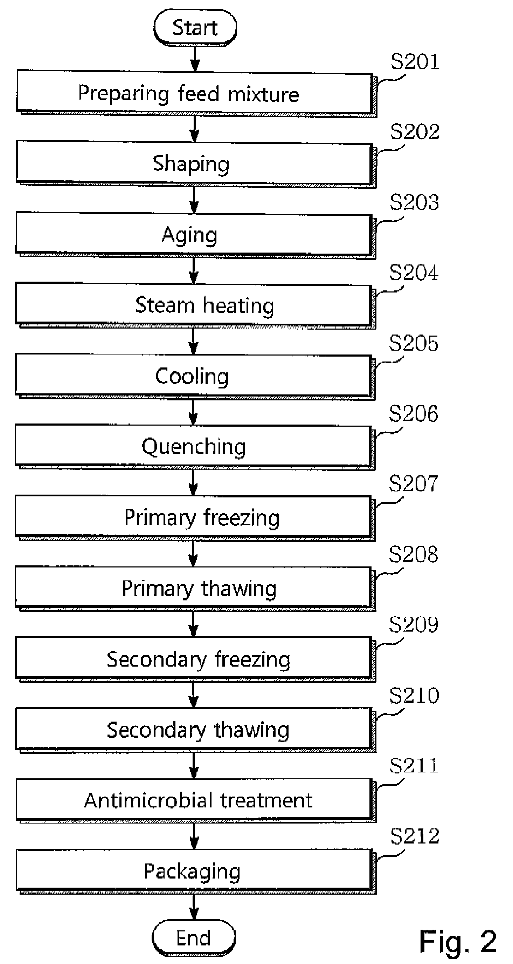

FIG. 2 illustrates a process of manufacturing a cleaning implement according to still another embodiment of the present invention.

As illustrated in FIG. 2, the method of manufacturing a cleaning implement according to still another embodiment of the present invention includes the sequential steps of: mixing water, a neutralizing agent, a mordanting agent, a foaming agent, an emulsifier and glycerin to obtain a mixed solution, which is then added with a konjac powder and a plurality of natural loofah pieces, and stirred, thus preparing a feed mixture (S201); placing the feed mixture in a mold so as to be shaped (S202); aging the feed mixture in the mold at 20 ∼ 30°C for 5 ∼ 20 hr (S203); steam heating the feed mixture at 90 ∼ 110°C for 1 - 5 hr using a steam heater, thus forming a sponge (S204); cooling the sponge to 20 ∼ 25°C for 1 - 2 hr (S205); quenching the sponge to -35 - -25°C for 2 ∼ 4 hr in a freezer (S206); primarily freezing the sponge to -15 ∼ -10°C for 3 ∼ 4 days in a freezer (S207); primarily thawing the sponge at 20 ∼ 30°C, thus removing the water, the neutralizing agent, the mordanting agent, the foaming agent, the emulsifier and the glycerin from the sponge by leakage (S208); secondarily freezing the sponge to -15 ∼ -10°C for 3 ∼ 4 days (S209); secondarily thawing the sponge at 20 - 30°C, thus removing the water, the neutralizing agent, the mordanting agent, the foaming agent, the emulsifier and the glycerin remaining in the sponge by leakage (S210); immersing the sponge in a bath containing an antimicrobial agent so as to undergo antimicrobial treatment and dehydrating the sponge (S211); and hermetically packaging the sponge under the condition that water is contained (S212).

Yet another embodiment of the present invention addresses a cleaning implement, manufactured by the aforementioned method and configured to include a konjac sponge comprising a plurality of natural loofah pieces, wherein the plurality of natural loofah pieces is dispersed in the konjac sponge.

Individual steps of the method according to the present invention are specified below.

### Preparing feed mixture (S101, S201)

In the step of preparing the feed mixture (S101, S201), the mixed solution preferably includes, based on the total weight of the mixed solution, 90 ∼ 93 wt% of water, 0.1 - 0.2 wt% of a neutralizing agent, 0.1 ∼ 0.2 wt% of a mordanting agent, 0.1 - 0.2 wt% of a foaming agent, 0.5 ∼ 1 wt% of an emulsifier, and 6 ∼ 9 wt% of glycerin, which are mixed together.

The water is added to efficiently mix the mixed solution with the konjac powder (and the natural loofah pieces) when the konjac powder (and the natural loofah pieces) is added to the mixed solution, and is preferably used in an amount of 90 ∼ 93 wt% based on the total weight of the mixed solution, so as not to affect the mixing ratio of the neutralizing agent, the mordanting agent, the foaming agent, the emulsifier and glycerin.

The neutralizing agent is added to create a neutralization reaction when mixing the water, the mordanting agent, the foaming agent, the emulsifier and glycerin. The neutralizing agent is used in an amount of 0.1 ∼ 0.2 wt% based on the total weight of the mixed solution, so as to ensure a neutralization effect of the mixed solution without affecting the mixing ratio of the water, the mordanting agent, the foaming agent, the emulsifier and glycerin.

The mordanting agent is added to sufficiently impregnate the fiber with the aqueous solution, and is used in an amount of 0.1 ∼ 0.2 wt% based on the total weight of the mixed solution, so as to ensure performance of the mordanting agent without affecting the mixing ratio of the water, the foaming agent, the emulsifier and glycerin.

The foaming agent is preferably added in an amount of 0.1 ∼ 0.2 wt% based on the total weight of the mixed solution, in order to achieve efficient foaming.

The emulsifier is added to efficiently mix the water, the neutralizing agent, the mordanting agent, the foaming agent and glycerin, and is preferably used in an amount of 0.5 - 1 wt% based on the total weight of the mixed solution, so as to obtain an inherent effect of the emulsifier without affecting the mixing ratio of the other components.

The glycerin is added to exhibit a conservation effect, mitigate external irritation and softly protect the skin and the mucosal surface, and is used in an amount of 6 - 9 wt% based on the total weight of the mixed solution, so as to obtain its effect without affecting the mixing ratio of the water, the neutralizing agent, the mordanting agent, the foaming agent and the emulsifier.

Specifically, the foaming agent is added to efficiently generate foams for forming a sponge in the subsequent steam heating process when the mixed solution is added with the konjac powder (and the natural loofah pieces) and stirred, and the neutralizing agent is added to uniformly and constantly distribute the generated foams to give a sponge having a predetermined shape. Also, the mordanting agent is added to increase the binding force of the generated foams so as to prevent deformation of the sponge, and the emulsifier is added to prevent the deformation of the formed sponge.

The foaming agent, the neutralizing agent and the mordanting agent enable the konjac powder (and the natural loofah pieces) to be constantly and uniformly dispersed in the sponge.

As mentioned above, based on the total weight of the mixed solution, 90 ∼ 93 wt% of water, 0.1 ∼ 0.2 wt% of the neutralizing agent, 0.1 ∼ 0.2 wt% of the mordanting agent, 0.1 ∼ 0.2 wt% of the foaming agent, 0.5 ∼ 1 wt% of the emulsifier, and 6 ∼ 9 wt% of glycerin may be mixed, thus easily producing the mixed solution without affecting the mixing ratio of the other components. Thereby, forming the sponge may be efficiently carried out.

The konjac powder is preferably a konjac powder from which impurities that are liable to form a rough surface upon production of a sponge are removed by means of alcohol purification. When it is manufactured into a sponge, particularly useful is a konjac powder ground to a particle size of 130 ∼ 180 mesh so as to form the surface of the sponge which comes into close contact with the skin of a user so as to exhibit the optimal contact force while minimizing the skin irritation.

Meanwhile, in the method of manufacturing the cleaning implement according to still another embodiment of the present invention, the natural loofah pieces result from grinding and cutting only the soft portion of a natural loofah, other than a portion containing the kernel. The length of the natural loofah pieces is not particularly limited but is preferably set to 1 - 15 mm.

In the step of preparing the feed mixture (S101, S201), the amount of the konjac powder added to the mixed solution is preferably 1 part by weight based on 12 parts by weight of the mixed solution.

Especially in the step of preparing the feed mixture including adding the plurality of natural loofah pieces (S201), the amount of the natural loofah pieces added to the mixed solution is preferably 1 ∼ 30 wt% based on the weight of the konjac powder added to the mixed solution.

This mixing ratio is set such that the sponge may be efficiently formed from the mixed solution in which the konjac powder has been sufficiently dissolved. As such, the konjac powder is gelled while being dissolved (S101, S201), and the loofah pieces are dispersed in the sponge without changing the cut size thereof (S201).

Accordingly, when the mixed solution and the konjac powder (and the natural loofah pieces) are mixed with stirring using a stirrer, the resulting mixture, may be formed into a sponge through foaming by the steam heating step which will be described later.

### Shaping (S102, 202)

In the shaping step (S102, 202), the feed mixture obtained by the step of preparing the feed mixture (S101, S201) is placed in a mold so as to be shaped.

This step is carried out such that the sponge is formed into a desired shape when the stirred feed mixture comprising the mixed solution and the konjac powder (and the natural loofah pieces) obtained by the step of preparing the feed mixture (S101, S201) is foamed to obtain a sponge shape by the steam heating step which will be described later.

The mold has a heat resistance temperature of 90°C or higher using polypropylene, and preferably prevents damage from an external temperature. The shape of the mold may vary depending on the selection of a user.

### Aging (S103, 203)

The aging step (S103, 203) is preferably performed by allowing the mold containing the feed mixture to stand at 20 ∼ 30°C for 5 ∼ 20 hr.

For example, in the aging step (S103, 203), the mold containing the feed mixture is positioned at a location or an additional storeroom at 20 ∼ 30°C, and thereby the feed mixture in a gel phase in the mold may completely expand and may be hardened so as to be adapted for the shape of the mold.

### Steam heating (S104, 204)

In the steam heating step (S104, 204), the feed mixture aged by the aging step (S103, 203) is steam heated at 90 ∼ 110°C for 1 ∼ 5 hr, thus forming a shape of a sponge (or a natural loofah-adhered sponge).

The steam heating step (S104, 204) is a process of foaming the feed mixture aged by the aging step (S103, 203) to form a sponge. The feed mixture is placed in a steam heater at 90 ∼110°C and thus steam heated for 1 ∼ 5 hr, and is thus foamed to form a sponge.

In the steam heating step (S104, 204), the temperature of the steam heater is 90 - 110°C. If the temperature thereof is lower than 90°C, the feed mixture may not be foamed. In contrast, if the temperature thereof exceeds 110°C, the produced foams may disappear. Hence, the temperature of the steam heater is preferably set to 90 ∼ 110°C.

Furthermore, a period of time required to heat the feed mixture in the steam heater is set to 1 ∼ 5 hr, thereby preventing the produced foams from disappearing due to the increased heating time without changing the foaming time, ultimately efficiently foaming the feed mixture.

### Cooling (S105, S205)

In the cooling step (S105, S205), the sponge (or the natural loofah-adhered sponge) formed by the steam heating step (S104, S204) is cooled to 20 - 25°C for 1 - 2 hr.

The cooling step (S105, S205) is performed to cool the product having the shape of the sponge (or the natural loofah-adhered sponge) formed by the steam heating step (S104, S204) without changing the shape of the product. As mentioned above, the sponge is cooled at 20 - 25°C for 1 - 2 hr. If the cooling time is increased, the heated sponge foams may be attached due to inherent viscosity of the konjac powder. Hence, the cooling step is preferably carried out for 1 ∼ 2 hr.

Especially, the natural loofah-adhered sponge (S105) may be configured such that the konjac component of the sponge adheres to the fiber of the natural loofah in the course of cooling due to inherent viscosity of the konjac component, thereby coupling the natural loofah part with the konjac sponge part, even without the use of a bonding agent that may have a negative influence on the human body.

### Quenching (S106, S206)

In the quenching step (S106, S206), the sponge (or the natural loofah-adhered sponge) formed by the cooling step (S105, S205) is quenched to -35 ∼ -25°C for 2 - 4 hr in a freezer. Thereby, the surface of the sponge is rapidly frozen, so that glucomannan natural fiber as the main ingredient of the konjac contained in the sponge may be securely maintained.

As the sponge efficiently containing the glucomannan natural fiber is formed, desired cleansing and skin effects may be obtained through performance of the glucomannan natural fiber upon cleansing of a users.

### Primary freezing (S107, S207)

The primary freezing step (S107, S207) is a process of freezing the quenched sponge (or natural loofah-adhered sponge) to -15 ∼ -10°C for 3 ∼ 4 days in a freezer. This step is conducted so that the cooled and quenched sponge (or natural loofah-adhered sponge) is frozen and thus the natural fiber of the sponge may become tough, thereby increasing the service life of the manufactured sponge.

As mentioned above, the freezing time is 3 ∼ 4 days. If the freezing time is less than 3 days or exceeds 4 days, the natural fiber of the sponge may not be tough or may be damaged, undesirably shortening the service life of the sponge. Hence, freezing for 3 ∼ 4 days may maximize the service life of the sponge.

### Primary thawing (S108, S208)

The sponge (or the natural loofah-adhered sponge) frozen by the primary freezing step (S107, S207) is thawed at 20 ∼ 30°C, thus removing the water, the neutralizing agent, the mordanting agent, the foaming agent, the emulsifier and the glycerin from the sponge by leakage. When the sponge (or the natural loofah-adhered sponge) having a shape suitable for a sponge (or a natural loofah-adhered sponge) is thawed, additives, such as the water, the neutralizing agent, the mordanting agent, the foaming agent, the emulsifier and the glycerin, which were added in the step of preparing the feed mixture, are discharged to the outside together with water.

Thereby, the natural fiber of the sponge may become firmer, and the additives added in the step of preparing the feed mixture are removed, thus preventing problems of skin trouble upon contact of such additives with the skin of a user.

### Secondary freezing (S109, S209)

The sponge (or the natural loofah-adhered sponge) obtained by the primary thawing step (S108, S208) is frozen to -15 ∼ -10°C for 3 ∼ 4 days. This step is carried out by repeating the same procedure as in the primary freezing step (S107, S207), so that the natural fiber of the sponge may become tougher, thereby increasing the service life of the manufactured sponge.

### Secondary thawing (S110, S210)

The sponge (or the natural loofah-adhered sponge) frozen by the secondary freezing step (S109, S209) is thawed at 20 ∼ 30°C, thus removing the water, the neutralizing agent, the mordanting agent, the foaming agent, the emulsifier and the glycerin remaining in the sponge (or the natural loofah-adhered sponge) by leakage. Thereby, the additive residues may be removed from the sponge as in the primary thawing step (S108, S208), thus completely removing the additives, which are liable to irritate the skin of a user, from the sponge so that the sponge only contains the konjac component (and the natural loofah pieces).

As such, in the secondary thawing step (S110, S210), a series of procedures of immersing the sponge (or the natural loofah-adhered sponge) in purified water and dehydrating it are repeated 1 to 3 times after thawing of the sponge (or the natural loofah-adhered sponge), thereby thoroughly removing the additives and various impurities which may be left behind in the sponge (or the natural loofah-adhered sponge).

### Antimicrobial treatment (S111, S211)

In the antimicrobial treatment step (S111, S211), the sponge (or the natural loofah-adhered sponge) obtained by the secondary thawing step (S110, S210) is immersed in a bath containing an antimicrobial agent so as to undergo antimicrobial treatment, and then dehydrated. This step is carried out to prevent propagation of fungi or microbes in the presence of water because the sponge (or the natural loofah-adhered sponge) contains the konjac and the natural loofah component as the natural materials.

In this step, the sponge (or the natural loofah-adhered sponge) may be immersed in the antimicrobial solution. Also, depending on the selection of a user, the sponge (or the natural loofah-adhered sponge) may be alternately immersed in the purified water and the antimicrobial solution and then dehydrated.

As for the water content of the sponge (or the natural loofah-adhered sponge) after the antimicrobial treatment step (S111, S211), the sponge (or the natural loofah-adhered sponge) formed by the antimicrobial treatment step (S111, S211) has a water content of 300 ∼ 900% based on the weight of a dry sponge (or natural loofah-adhered sponge). By virtue of the secondary thawing step (S110, S210), the sponge (or the natural loofah-adhered sponge) is thawed and then dehydrated, and the sponge (or the natural loofah-adhered sponge) is dried through natural wind at room temperature and then subjected to the antimicrobial treatment step, thereby obtaining a sponge (or a natural loofah-adhered sponge) which is dried under the condition that the antimicrobial solution and water are held therein.

### Packaging (S112, S212)

This packaging step is conducted to hermetically package the sponge (or the natural loofah-adhered sponge) under the condition that water is contained after the antimicrobial treatment step (S111, S211). Compared to a dry sponge (or natural loofah-adhered sponge) which is dehydrated and dried and thus has no water so as to be stored for a long period of time after the secondary thawing step (S110, S210), the sponge (or the natural loofah-adhered sponge) to be packaged in the packaging step preferably has a water content of 300 - 900%.

For example, the sponge (or the natural loofah-adhered sponge) under the condition that water is contained after the antimicrobial treatment step (S111, S211) following the secondary thawing step (S110, S210) may be hermetically packaged. Alternatively, the sponge (or the natural loofah-adhered sponge) obtained by the secondary thawing step (S110, S210) may be dried and stored, after which the antimicrobial treatment step (S111, S211) is carried out and then the sponge (or the natural loofah-adhered sponge) under the condition that water is contained may be hermetically packaged. This process may be selectively performed depending on the choice of a user, and may be variously applied depending on the convenience of the manufacturing process or the storage conditions of the manufactured sponge (or natural loofah-adhered sponge).

In the packaging step (S112, S212), however, the sponge (or the natural loofah-adhered sponge) preferably contains water in an amount of 300 - 900% by weight based on the weight of a dry sponge (or natural loofah-adhered sponge).

In the present invention, as the sponge (or the natural loofah-adhered sponge) under the condition that water is contained is hermetically packaged in the packaging step (S112, S212), propagation of fungi and microbes in the sponge (or the natural loofah-adhered sponge) may be prevented by means of the antimicrobial agent sufficiently incorporated into the sponge (or the natural loofah-adhered sponge) in the antimicrobial treatment step (S111, S211). Furthermore, even when the packaged sponge (or natural loofah-adhered sponge) is used, the user will not feel reluctant to touch his or her skin due to water being contained in the sponge (or the natural loofah-adhered sponge).

Although the embodiments of the present invention have been disclosed for illustrative purposes, those skilled in the art will appreciate that a variety of different modifications and variations are possible, without departing from the technical conception and essential features of the invention. Also, the scope of the present invention is defined by the following claims rather than by the detailed description of the illustrative embodiments, and all modifications and variations conceived from the meaning and scope of the claims and their equivalents should be understood as falling within the scope of the present invention.

### [Industrial Applicability]

According to the present invention, a method of manufacturing a cleaning implement for skin cleaning which can be conveniently and variously used can be usefully applied to the skin cleaning implement industries.

## Claims

1. A method of manufacturing a cleaning implement, comprising:
placing a natural loofah in a portion of a mold having an inner space;
mixing water, a neutralizing agent, a mordanting agent, a foaming agent, an emulsifier and glycerin to obtain a mixed solution, which is then added with a konjac powder and stirred, thus preparing a feed mixture;
placing the feed mixture in a portion of the mold other than the portion containing the natural loofah so as to be shaped such that the natural loofah and the feed mixture adhere to each other;
aging the feed mixture in the mold at 20 - 30°C for 5 ∼ 20 hr;
steam heating the feed mixture at 90 ∼ 110°C for 1 ∼ 5 hr using a steam heater, thus forming a natural loofah-adhered sponge;
cooling the natural loofah-adhered sponge to 20 ∼ 25°C for 1 ∼ 2 hr;
quenching the natural loofah-adhered sponge to -35 ∼ 25°C for 2 ∼ 4 hr in a freezer;
primarily freezing the natural loofah-adhered sponge to - 15 - -10°C for 3 ∼ 4 days in a freezer;
primarily thawing the natural loofah-adhered sponge at 20 ∼ 30°C, thus removing the water, the neutralizing agent, the mordanting agent, the foaming agent, the emulsifier and the glycerin from the sponge by leakage;
secondarily freezing the natural loofah-adhered sponge to -15 ∼ -10°C for 3 ∼ 4 days;
secondarily thawing the natural loofah-adhered sponge at 20 ∼ 30°C, thus removing the water, the neutralizing agent, the mordanting agent, the foaming agent, the emulsifier and the glycerin remaining in the sponge by leakage;
immersing the natural loofah-adhered sponge in a bath containing an antimicrobial agent so as to undergo antimicrobial treatment and dehydrating the natural loofah-adhered sponge; and
hermetically packaging the natural loofah-adhered sponge under a condition that water is contained,

2. The method of claim 1, wherein in preparing the feed mixture, the mixed solution is obtained by mixing, based on a total weight of the mixed solution, 90 ∼ 93 wt% of the water, 0.1 ∼ 0.2 wt% of the neutralizing agent, 0.1 ∼ 0.2 wt% of the mordanting agent, 0.1 ∼ 0.2 wt% of the foaming agent, 0.5 ∼ 1 wt% of the emulsifier, and 6 ∼ 9 wt% of the glycerin.

3. The method of claim 1, wherein in preparing the feed mixture, the konjac powder added to the mixed solution is used in an amount of 1 part by weight based on 12 parts by weight of the mixed solution.

4. The method of claim 1, wherein in preparing the feed mixture, the konjac powder has a particle size of 130 - 180 mesh.

5. The method of claim 1, wherein in packaging, the natural loofah-adhered sponge contains water in an amount of 300 ∼ 900% by weight based on a weight of a dry natural loofah-adhered sponge.

6. A cleaning implement, manufactured by the method of any one of claims 1 to 5 and configured such that a konjac sponge part comprising a sponge composed mainly of konjac is integrated with a natural loofah part comprising a natural loofah.

7. A method of manufacturing a cleaning implement, comprising:
mixing water, a neutralizing agent, a mordanting agent, a foaming agent, an emulsifier and glycerin to obtain a mixed solution, which is then added with a konjac powder and a plurality of natural loofah pieces, and stirred, thus preparing a feed mixture;
placing the feed mixture in a mold so as to be shaped;
aging the feed mixture in the mold at 20 ∼ 30°C for 5 ∼ 20 hr;
steam heating the feed mixture at 90 ∼ 110°C for 1 ∼ 5 hr using a steam heater, thus forming a sponge;
cooling the sponge to 20 - 25°C for 1 ∼ 2 hr;
quenching the sponge to -35 - -25°C for 2 - 4 hr in a freezer;
primarily freezing the sponge to -15 - -10°C for 3 ∼4 days in a freezer;
primarily thawing the sponge at 20 ∼ 30°C, thus removing the water, the neutralizing agent, the mordanting agent, the foaming agent, the emulsifier and the glycerin from the sponge by leakage;
secondarily freezing the sponge to -15 - -10°C for 3 ∼ 4 days;
secondarily thawing the sponge at 20 ∼ 30°C, thus removing the water, the neutralizing agent, the mordanting agent, the foaming agent, the emulsifier and the glycerin remaining in the sponge by leakage;
immersing the sponge in a bath containing an antimicrobial agent so as to undergo antimicrobial treatment and dehydrating the sponge; and
hermetically packaging the sponge under a condition that water is contained.

8. The method of claim 7, wherein in preparing the feed mixture, the mixed solution is obtained by mixing, based on a total weight of the mixed solution, 90 - 93 wt% of the water, 0.1 ∼ 0.2 wt% of the neutralizing agent, 0.1 ∼ 0.2 wt% of the mordanting agent, 0.1 ∼ 0.2 wt% of the foaming agent, 0.5 ∼ 1 wt% of the emulsifier, and 6 ∼ 9 wt% of the glycerin.

9. The method of claim 7, wherein in preparing the feed mixture, the konjac powder added to the mixed solution is used in an amount of 1 part by weight based on 12 parts by weight of the mixed solution.

10. The method of claim 7, wherein in preparing the feed mixture, the plurality of natural loofah pieces added to the mixed solution is used in an amount of 1 ∼ 30 wt% based on a weight of the konjac powder added to the mixed solution.

11. The method of claim 7, wherein in preparing the feed mixture, the konjac powder has a particle size of 130 ∼ 180 mesh.

12. The method of claim 7, wherein in preparing the feed mixture, the natural loofah pieces have a length of 1 ∼ 15 mm.

13. The method of claim 7, wherein in packaging, the sponge contains water in an amount of 300 ∼ 900% by weight based on a weight of a dry sponge.

14. A cleaning implement, manufactured by the method of any one of claims 7 to 13 and configured to comprise a konjac sponge comprising a plurality of natural loofah pieces.
